# EUROPÄISCHE PATENTSCHRIFT

(11) **EP 2 530 283 B1**
(45) Veröffentlichungstag und Bekanntmachung des Hinweises auf die Patenterteilung: **11.09.2013**
(21) Anmeldenummer: 11168141.7
(22) Anmeldetag: 31.05.2011
(51) Int. Cl.: F02C 9/18, F02K 3/02, F02C 6/16, F17C 1/00, F28D 20/00

(54) **Adiabatisches Druckluftspeicherkraftwerk**
Adiabatic pressurised air storage power plant
Centrale d'accumulation d'air comprimé adiabatique

(43) Veröffentlichungstag der Anmeldung: 05.12.2012
(73) Patentinhaber: ED. ZÜBLIN AG, 70567 Stuttgart (DE)
(72) Erfinder: Mayer, Peter-Michael, 70192 Stuttgart (DE); Niklasch, Christoph, 71139 Ehningen (DE)

(56) Entgegenhaltungen:
- WO-A1-2011/053411
- US-A1- 2009 178 384
- US-A1- 2010 083 660

## Beschreibung

### Technisches Gebiet

Die Erfindung betrifft ein adiabatisches Druckluftspeicherkraftwerk gemäß dem Oberbegriff des Anspruchs 1.

### Stand der Technik

Beispielsweise um wetterabhängige regenerative Energiequellen, wie etwa Windkraft und/oder Solarenenergie, zur Spitzenlast- und/oder Mittellast- und/oder Grundlast-Stromversorgung vorzusehen, werden Speicherkraftwerke benötigt, welche die Energie von während günstiger Wetterbedingungen gegenüber dem Stromverbrauch zuviel produzierten Stroms zum Ausgleich während ungünstiger Wetterbedingungen gegenüber dem Stromverbrauch zuwenig produzierten Stroms speichern können. Dabei kann auch längerfristig vorgesehen sein Energiemengen vorzuhalten, die beispielsweise Nachfrageunterschiede zwischen Sommer und Winter ausgleichen können.

Ein Druckluftspeicherkraftwerk ist ein Beispiel für ein solches Speicherkraftwerk.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit überschüssiger elektrischer Energie vermittels eines elektrisch angetriebenen Verdichters Luft verdichtet und die so hergestellte Druckluft in einem Druckluftspeicher gespeichert, beispielsweise in einer unterirdischen Kaverne oder Mine. In Zeiten z.B. hoher Stromnachfrage, wie etwa bei Spitzenlast, wird die Druckluft aus dem Druckluftspeicher entnommen und unter Brennstoffzufuhr mit anschließender Verbrennung in einer Gasturbine entspannt, die ihre Leistung an einen gekoppelten Generator abgibt. Bei der Gasturbine handelt es sich dabei um eine Verbrennungskraftmaschine in Form einer als Wellenleistungstriebwerk ausgeführten Turbomaschine bestehend im Wesentlichen aus Verdichter, Brennkammer und Turbine. Eine im Verdichter stattfindende und mit einem Temperaturanstieg einhergehende Druckerhöhung vor der endgültigen Entspannung ist hierbei erforderlich, um eine stabile Verbrennung in der Brennkammer sicherstellen zu können. Im Vergleich zu einer bei Umgebungsdruck betriebenen Gasturbine muss hierbei allerdings ein kleinerer Teil der den Verbrennungsabgasen entnommenen Energie zur Verdichtung aufgewendet werden, da der Gasturbine bereits verdichtete Druckluft aus dem Druckluftspeicher zugeführt wird.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Gasturbine und Generator zur Bereitstellung elektrischen Stroms zu Zeiten der Spitzenlast.

Bekannte Probleme von Druckluftspeicherkraftwerken sind deren eingeschränkter Gesamtwirkungsgrad bedingt einerseits durch hohe Verluste aufgrund beabsichtigter und unbeabsichtigter Wärmeabgabe bei der Erzeugung und Speicherung der Druckluft sowie andererseits durch gegebenenfalls vorgesehene, der Gefahr einer Vereisung der Gasturbine bei der Entspannung der Druckluft entgegenwirkender konventioneller Maßnahmen. Die Gründe hierfür sind folgende:
- Die Verdichtung bzw. Kompression der Luft führt zu einer Erhöhung deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Hierbei können je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.
- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.
- Die Luft kühlt bei der Expansion stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch konventionelles Zuheizen mittels eines Brennstoffs, wie etwa Erdgas. Hierbei wird der Brennstoff der Druckluft bei deren Entnahme aus dem Druckluftspeicher beigemengt. Das Brennstoff-Luft-Gemisch wird anschließend vor dem Eintritt in die Gasturbine entzündet, welche den Generator antreibt.

Zur Verbesserung des Gesamtwirkungsgrads von Druckluftspeicherkraftwerken ist bekannt, die Restwärme der der Gasturbine entweichenden Abgase mittels eines Rekuperators der aus dem Druckluftspeicher entnommenen Luft noch vor deren Eintritt in die Gasturbine zuzuführen. Hierdurch wird zumindest der Brennwert des Brennstoff-Luft-Gemischs besser ausgeschöpft.

Durch US 2009/0178384 A1 sind verschiedene Druckluftspeicherkraftwerke bekannt. Vermittels eines Verdichters wird bei diesen der Umgebung Luft entnommen, verdichtet und als Druckluft einem Druckluftspeicher zugeführt. Zwischenkühler am Verdichter führen die beim Verdichten entstehende Wärme an die Umgebung ab. Jedes der Druckluftspeicherkraftwerke umfasst eine Gasturbine, welche über einen Einlass Umgebungsluft mit einem eigenen Verdichter verdichtet, der verdichteten Luft in einer Brennkammer Brennstoff zuführt und entzündet, und in einer eigenen Turbine die Verbrennungsabgase entspannt. Die eigene Turbine der Gasturbine treibt dabei deren eigenen Verdichter und einen eigenen Generator an. Die in den der Gasturbine entweichenden Verbrennungsabgasen enthaltene Restwärme wird dazu genutzt, die beim Entladen des Druckluftspeichers entnommene Druckluft zu erwärmen, bevor diese selbst einer einen Generator antreibenden Turbine zugeführt wird. Hierzu ist ein Rekuperator vorgesehen, gegebenenfalls ergänzt um einen zusätzlichen, die dem Druckluftspeicher entnommene Druckluft vor deren Eintritt in die Turbine erhitzenden Brenner. Alternativ kann die Erwärmung durch eine externe Wärmequelle erfolgen. Ein Teil der die Turbine durchströmenden, dem Druckluftspeicher entnommenen Druckluft wird abgezweigt und der Brennkammer der Gasturbine über Rohre zugeführt. Bei einigen der Druckluftspeicherkraftwerke wird der dem Druckluftspeicher entnommenen Druckluft Dampf zugefügt, einerseits um diese zu erwärmen, und andererseits, um bei gleich bleibender Leistungsabgabe einen geringeren Massenstrom an dem Druckluftspeicher entnommener Druckluft zu benötigen. Dadurch kann im Vergleich zu einer Ausführung ohne Dampfzufuhr ein kleineres Speichervolumen des Druckluftspeichers unter entsprechender Kosteneinsparung vorgesehen werden. Damit einhergehend kann ein kleinerer Verdichter mit geringerem Leistungsbedarf im Aufladebetrieb eingesetzt werden, wodurch der Gesamtwirkungsgrad des Druckluftspeicherkraftwerks verbessert wird. Der Dampf wird entweder durch die Verbrennungsabgase der Gasturbine oder anhand einer anderen externen Wärmequelle erhitzt.

Durch US 2010/083660 A1 sind ebenfalls verschiedene Druckluftspeicherkraftwerke bekannt.

Ein erstes durch US 2010/083660 A1 bekanntes Druckluftspeicherkraftwerk umfasst:
- einen von einem Motor angetriebenen Niederdruckverdichter,
- einen strömungstechnisch nach dem Niederdruckverdichter angeordneten Zwischenkühler,
- einen von einem Motor angetriebenen Hochdruckverdichter,
- einen dem Hochdruckverdichter strömungstechnisch nach und dem Druckluftspeicher vorgeschalteten Nachkühler, sowie
- eine Brennkammer, in welcher dem Druckluftspeicher entnommene Druckluft mit einem Brennstoff vermischt und entzündet wird, und
- eine einen Generator antreibende, mit den Verbrennungsabgasen der Brennkammer betriebene Turbine.

Ein zweites durch US 2010/083660 A1 bekanntes Druckluftspeicherkraftwerk umfasst eine Gasturbine bestehend aus Verdichter, Brennkammer und einer den Verdichter und einen Generator antreibenden Turbine. Ferner umfasst das zweite Druckluftspeicherkraftwerk einen motorgetriebenen Verdichter, dessen erzeugte Druckluft nach Durchlaufen eines Nachkühlers und Abkühlung auf etwa 39°C (102°F) einem Druckluftspeicher zugeführt wird. Im Entladebetrieb wird die Restwärme der Gasturbine vermittels eines Rekuperators dazu verwendet, die dem Druckluftspeicher entnommene Druckluft vor deren Entspannung in einer ebenfalls einen Generator antreibenden Turbine zu erhitzen.

Zur Verbesserung des Gesamtwirkungsgrads des zuvor beschriebenen ersten und zweiten Druckluftspeicherkraftwerks sind durch US 2010/083660 A1 ferner ein drittes und ein viertes Druckluftspeicherkraftwerk bekannt. Beide weisen einen motorbetriebenen Niederdruckverdichter mit nachgeschaltetem, ebenfalls motorbetriebenem Hochdruckverdichter, Zwischenkühler und Nachkühler auf, um im Aufladebetrieb einem Druckluftspeicher auf etwa 37°C (100°F) abgekühlte Druckluft zuzuführen. Im Entladebetrieb wird die im Druckluftspeicher gespeicherte Druckluft entnommen und vermittels eines Rekuperators vorgewärmt und vermittels eines Rohrbrenners nacherhitzt, bevor die erhitzte Druckluft einer einen Generator antreibenden Turbine zugeführt wird. Beim dritten Druckluftspeicherkraftwerk wird ein Teil der erhitzten Druckluft von der Turbine abgezweigt und einer Brennkammer zugeführt, in welcher der Druckluft Brennstoff beigemischt und das Brennstoff-Druckluft-Gemisch entzündet wird. Die Verbrennungsabgase werden in einer ebenfalls einen Generator antreibender Turbine entspannt. Die in den Verbrennungsabgasen nach Durchlaufen der Turbine enthaltene Restwärme wird zum Teil über den Rekuperator der dem Druckluftspeicher entnommenen Druckluft zugeführt. Bei dem vierten Druckluftspeicherkraftwerk wird nicht nur ein Teil der erhitzten Druckluft von der Turbine abgezweigt, sondern die gesamte Abluft aus der Turbine der Brennkammer zugeführt.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise kein Brennstoff zur Erwärmung der Luft benötigt. Während der Expansion in der Turbine kühlt die Luft auf Umgebungstemperatur ab. Ein adiabatisches Druckluftspeicherkraftwerk erreicht so im Vergleich zu einem zuvor beschriebenen Druckluftspeicherkraftwerk mit Gasturbine einen höheren Wirkungsgrad. Entgegen ihrer Bezeichnung führen adiabatische Druckluftspeicherkraftwerke jedoch keine adiabatischen Zustandsänderungen aus, sie kommen durch die Rückführung der bei der Verdichtung erzeugten Wärme an die aus dem Druckluftspeicher entnommene Luft dem Wirkungsgrad adiabatischer Zustandsänderungen lediglich näher.

Durch WO 2011/053411 A1 ist ein adiabatisches Druckluftspeicherkraftwerk mit mindestens einem Druckluftspeicher, wenigstens einer mit dem Druckluftspeicher über ein Rohrleitungssystem mit zumindest zeitweilig druckführenden Rohrleitungen zumindest bedarfsweise verbundenen Strömungsmaschine zum Verdichten und/oder Entspannen von im Druckluftspeicher gespeicherter Druckluft, sowie mindestens einem Wärmespeicher mit zur Durchleitung eines Wärmeübertragungsfluids geeigneten Wärmespeichermitteln zur Zwischenspeicherung von beim Verdichten entstehender und beim Entspannen wieder benötigter Wärme bekannt. Der Wärmespeicher ist in einem Sekundärkreislauf angeordnet. Der Sekundärkreislauf ist von den zeitweilig druckführenden Rohrleitungen des Rohrleitungssystems durch mindestens einen primärseitig zeitweilig von der Druckluft durchströmten Wärmetauscher getrennt. Über einen Zwischenkühler kann ein Teil der beim Verdichten entstehenden Wärme an die Umgebung abgeführt werden.

Durch EP 1 857 614 A2 ist ein als ein Wärmespeicher für ein adiabatisches Druckluftspeicherkraftwerk ausgeführter und für diesen Zweck in einem Wärmespeicherraum zum Austausch von Wärme mit der Druckluft geeignete Wärmespeichermittel beherbergender Druckbehälter bekannt. Der Wärmespeicherraum ist von dem Druckbehälter umschlossen. Die Wärmespeichermittel sind zum Austausch von Wärme mit einem Arbeitsfluid sowie zur wenigstens zeitweiligen Speicherung der Wärme von deren Zufuhr bis zu deren Entnahme durch das Arbeitsfluid ausgebildet und vorgesehen. Zum Auf- und Entladen des Wärmespeichers durch Zufuhr und Entnahme von Wärme unter Austausch von Wärme mit den Wärmespeichermitteln wird der Wärmespeicherraum von Druckluft durchströmt, die von einer zur Verdichtung und wieder Entspannung der Druckluft vorgesehenen Strömungsmaschine einer den Druckluftspeicher des adiabatischen Druckluftspeicherkraftwerks bildenden Kaverne oder von dem Druckluftspeicher wieder der Strömungsmaschine zuzuführen ist. Der Wärmespeicherraum kommuniziert hierzu einerseits mit der Kaverne und andererseits während des Aufladens und während des Entladens mit der Strömungsmaschine. Der Druckbehälter dieses Wärmespeichers weist einen vorgespannten Betonmantel aus hochfestem Beton mit Stahlkappe auf, welcher den Wärmespeicherraum umgibt. Die Vorspannung erfolgt horizontal und vertikal bevorzugt durch Spannglieder aus Kohlefasern. Eine hitzebeständige Schicht und eine erste thermisch isolierende Schicht trennen die Wärmespeichermittel vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Die Wärmespeichermittel bestehen aus Formsteinen aus einem keramischen Material. Diese sind von der Druckluft unmittelbar durchströmt. Hierzu weisen die Formsteine Durchführungen in Form von Strömungskanalabschnitten für die unter Druck stehende Luft auf. Die Wärmespeichermittel haben wegen der Änderung deren Volumens bei Temperaturwechseln keinen direkten Kontakt zu dem den Behälterinnenraum umgebenden Betonmantel und auch nicht zu den die Wärmespeichermittel vom temperaturempfindlicheren Beton trennenden hitzebeständigen und thermisch isolierenden Schichten. Damit die durch das Auf- und Entladen des Wärmespeichers ständig stattfindenden Temperaturzyklen nicht zu einer Verschiebung der Formsteine und deren Strömungskanalabschnitte relativ zueinander führen, können die Formsteine mit Nut und Feder versehen sein, mit denen sie ineinander greifen.

Nachteilig hieran ist der hohe konstruktive Aufwand für den Wärmespeicher, einerseits bedingt durch den Druckbehälter des Wärmespeichers, andererseits bedingt durch die im vom Druckbehälter umschlossenen Wärmespeicherraum beherbergten und zum Austausch von Wärme mit der Druckluft vorgesehenen Wärmespeichermitteln. Darüber hinaus ist an diesem Wärmespeicher eine latente Verschlechterung des Wirkungsgrads eines mit diesem ausgestatteten Druckluftspeicherkraftwerks durch unkontrolliertes Entweichen von Luft in die Umgebung nachteilig. Ein zusätzlicher Nachteil ergibt sich durch die begrenzte regelungstechnische Einflussnahmemöglichkeit auf den Austausch der Wärme zwischen den Wärmespeichermitteln und der Druckluft.

Durch WO 2010/060524 A1 ist ein unter anderem auch zur Verwendung in einem adiabatischen Druckluftspeicherkraftwerk vorgeschlagener Wärmespeicher bekannt. Der Wärmespeicher umfasst von zur Durchleitung eines Wärmeübertragungsfluids vorgesehenen Strömungskanälen durchzogene Wärmespeichermittel. Als Wärmespeichermittel sind ein oder mehrere Festkörper vorgesehen, in oder zwischen denen die Strömungskanäle ausgebildet sind. Der Wärmespeicher umfasst außerdem einen ersten Wärmetauscher, der primärseitig von einem Arbeitsmedium durchströmt ist und der sekundärseitig von dem Wärmeübertragungsfluid durchströmt ist. Ein primärseitig den ersten Wärmetauscher umfassendes und von dem Arbeitsmedium durchströmtes Rohrleitungssystem bildet dabei einen vom Arbeitsmedium durchströmten Primärkreislauf. Die vom Wärmeübertragungsfluid durchströmten Strömungskanäle und der sekundärseitig vom Wärmeübertragungsfluid durchströmte erste Wärmetauscher bilden gemeinsam einen vom Wärmeübertragungsfluid durchströmten Sekundärkreislauf. Zum Auf- und Entladen des Wärmespeichers durchströmt das Wärmeübertragungsfluid die Strömungskanäle einerseits und andererseits sekundärseitig den primärseitig vom Arbeitsmedium durchströmten ersten Wärmetauscher. Bei dem Arbeitsmedium kann es sich um Druckluft eines adiabatischen Druckluftspeicherkraftwerks handeln. Der das Rohrleitungssystem mit dem ersten Wärmetauscher umfassende Primärkreislauf verbindet hierbei eine zur Verdichtung und wieder Entspannung von Druckluft vorgesehene Strömungsmaschine mit einem Druckluftspeicher des adiabatischen Druckluftspeicherkraftwerks. Das Wärmeübertragungsfluid steht dabei im Sekundärkreislauf ständig mit den Wärmespeichermitteln und dem ersten Wärmetauscher in Kontakt. Hierdurch kommt es zu schleichenden Wärmeverlusten aus dem Wärmespeicher über den Primärkreislauf, auch wenn dieser zeitweilig nicht von Druckluft durchströmt wird. Ein weiterer hieraus resultierender Nachteil ist, dass der Primärkreislauf lokal überhitzt wird. Dies führt insbesondere beim Aufeinandertreffen kalter Druckluft aus dem Druckluftspeicher bei beginnendem Entladebetrieb auf die lokale Überhitzung zu erheblichen Materialbeanspruchungen und -ermüdungen einhergehend mit Schäden im Primärkreislauf bis hin zum Totalausfall des adiabatischen Druckluftspeicherkraftwerks. Ein zusätzlicher Nachteil ergibt sich auch hier durch die begrenzte regelungstechnische Einflussnahmemöglichkeit auf den Austausch der Wärme zwischen den Wärmespeichermitteln und der Druckluft. Die für den Wärmespeicher vorgeschlagene Verwendung in einem adiabatischen Druckluftspeicherkraftwerk hat darüber hinaus den Nachteil, dass eine Strömungsmaschine für das Verdichten und wieder Entspannen der Druckluft vorgesehen ist. Da Strömungsmaschinen um einen optimalen Wirkungsgrad zu erreichen genau auf einen mit ihnen zu erzielenden Zweck hin ausgelegt sein müssen, wird durch Verwendung der selben Strömungsmaschine für unterschiedliche Aufgaben eine erhebliche Verschlechterung des Wirkungsgrads in beiden Richtungen billigend in Kauf genommen. Zur Entnahme von im Wärmespeicher gespeicherter Wärme unter Umgehung des zuvor beschriebenen ersten Wärmetauschers ist vorgesehen, die Wärme entweder frei von einem Wärmetauscher direkt vermittels des Wärmeübertragungsfluids einem Wärmeverbraucher zuzuleiten, oder einem zweiten, von einem Tertiärkreislauf umfassten Wärmetauscher zuzuführen, welcher primärseitig vom Wärmeübertragungsfluid und sekundärseitig von einem für das Entladen des Wärmespeichers optimierten Arbeitsmedium durchströmt ist. Das den ersten Wärmetauscher primärseitig durchströmende Arbeitsmedium ist hierbei zum Aufladen des Wärmespeichers bestimmt und für diese Aufgabe optimiert. Nachteilig an diesen vorgeschlagenen Maßnahmen ist, dass sie die Verwendung des Wärmespeichers in einem adiabaten Druckluftspeicherkraftwerk vereiteln, da hierbei das Arbeitsfluid für das Auf- und Entladen des Wärmespeichers identisch, nämlich Druckluft ist. Bei dem bekannten Wärmespeicher sind sind Flüssigkeiten und alternativ Gase als Wärmeübertragungsfluid vorgesehen. Bei der Verwendung von Gasen als Wärmeübertragungsfluid ist vorgeschlagen, den gesamten, den Wärmespeicher umfassenden Sekundärkreislauf mit Unterdruck zu beaufschlagen. Nachteilig hieran sind einerseits die hohen Kosten der Beaufschlagung mit und der Überwachung und Einhaltung des Unterdrucks, die mangelnde Systemsicherheit wegen der Gefahr des Eindringens von Umgebungsluft bei einer Leckage, sowie die Notwendigkeit, eine gasdichte Abdichtung des gesamten Systems vorzusehen.

### Aufgabe der Erfindung

Der Erfindung liegt die Aufgabe zugrunde, ein adiabatisches Druckluftspeicherkraftwerk zu entwickeln, welches frei ist von zumindest einem Teil der Nachteile des Standes der Technik und bei dem ausgehend vom Stand der Technik der Wirkungsgrad vergrößert sowie eine verbesserte regelungstechnische Einflussnahme auf den Austausch der Wärme zwischen der Druckluft und den Wärmespeichermitteln ermöglicht und eine im Vergleich zum Stand der Technik kostengünstigere Herstellung mit einfachen Mitteln erzielbar ist, und das eine höhere Betriebssicherheit aufweist.

### Darstellung der Erfindung

Die Aufgabe wird gelöst durch ein adiabatisches Druckluftspeicherkraftwerk mit den Merkmalen des Anspruchs 1.

Demnach ist ein adiabatisches Druckluftspeicherkraftwerk vorgesehen mit:
- mindestens einem Druckluftspeicher,
- wenigstens einer mit dem mindestens einen Druckluftspeicher über ein Rohrleitungssystem mit zumindest zeitweilig druckführenden Rohrleitungen zumindest bedarfsweise verbundenen Strömungsmaschine zum Verdichten und/oder Entspannen von im Druckluftspeicher gespeicherter Druckluft vorzugsweise unter Verbrauch und Erzeugung elektrischer Energie, sowie
- mindestens einem Wärmespeicher zur Zwischenspeicherung von beim Verdichten entstehender und beim Entspannen wieder benötigter Wärme.

Der Wärmespeicher umfasst zur Durchleitung eines gasförmigen und/oder flüssigen Wärmeübertragungsfluids geeignete Wärmespeichermittel. Die Wärmespeichermittel sind in der Lage, Wärme aufzunehmen, die Wärme über einen bestimmten Zeitraum hinweg zu speichern und anschließend bei Bedarf wieder abzugeben.

Beispielsweise können die Wärmespeichermittel von zur Durchleitung des Wärmeübertragungsfluids vorgesehenen Strömungskanälen durchzogen sein.

Als Wärmespeichermittel können ein oder mehrere Festkörper vorgesehen sein, in oder zwischen denen die Strömungskanäle ausgebildet sind. Beispielsweise können die Wärmespeichermittel eine Schüttung aus einander berührenden Schüttungselementen umfassen. Zwischen den einander berührenden Schüttungselementen weist die Schüttung miteinander kommunizierende, durchgehende Poren auf, welche von dem Wärmeübertragungsfluid durchströmt werden können.

Die Wärmespeichermittel können alternativ oder zusätzlich ein bevorratetes Volumen Wärmeübertragungsfluid umfassen.

Das adiabatische Druckluftspeicherkraftwerk kann Absperrmittel zum zeitweiligen Absperren wenigstens eines Teils des Sekundärkreislaufs zwischen den Wärmespeichermitteln bzw. dem Wärmespeicher und wenigstens einem Wärmetauscher aufweisen. Hierdurch werden schleichende Wärmeverluste aus dem Wärmespeicher in das Rohrleitungssystem sowie eine lokale Überhitzung des Rohrleitungssystems sowie die damit einhergehenden, einleitend beschriebenen nachteiligen Folgen verhindert.

Das adiabatische Druckluftspeicherkraftwerk zeichnet sich durch mindestens einen in einem Sekundärkreislauf angeordneten, gegenüber der Umgebung vorzugsweise drucklosen Wärmespeicher aus, der von den zeitweilig druckführenden Rohrleitungen des Rohrleitungssystems durch mindestens einen primärseitig zeitweilig von der Druckluft durchströmten und sekundärseitig ebenfalls nur während des primärseitigen Durchströmens mit Druckluft zeitweilig von dem Wärmeübertragungsfluid durchströmten Wärmetauscher getrennt ist. Die Erfindung verhindert schleichende Wärmeverluste und lokale Überhitzungen des Rohrleitungssystems durch ein nur zeitweiliges und vorzugsweise mit dem Durchströmen zumindest eines Teils des Rohrleitungssystem von Druckluft gekoppeltes Durchströmen zumindest von wenigstens den mindestens einen ersten Wärmetauscher umfassenden Teilen des Sekundärkreislaufs vom Wärmeübertragungsfluid. Darüber hinaus erlaubt die Erfindung eine Auftrennung der Energieströme, so dass der Aufstellungsort des Wärmespeichers unabhängig von einer Strömungsführung der Druckluft im Rohrleitungssystem des Druckluftspeicherkraftwerks ist.

Das adiabatische Druckluftspeicherkraftwerk kann getrennte Strömungsmaschinen zum Verdichten und zur Entspannung der Druckluft aufweisen. Hierzu umfasst das Rohrleitungssystem wenigstens eine mindestens eine erste Strömungsmaschine zum Verdichten der Druckluft mit dem mindestens einen Druckluftspeicher zumindest zeitweilig verbindende und zumindest zeitweilig druckführende erste Rohrleitung. Ferner umfasst das Rohrleitungssystem hierzu wenigstens eine den mindestens einen Druckluftspeicher mit mindestens einer zweiten Strömungsmaschine zum Entspannen der Druckluft zumindest zeitweilig verbindende und zumindest zeitweilig druckführende zweite Rohrleitung. Strömungsmaschinen, allen voran Turbomaschinen, für Verdichtung und Entspannung unterscheiden sich maßgeblich in ihrer Konstruktion. Durch das erfindungsgemäße adiabatische Druckluftspeicherkraftwerk können getrennt voneinander jeweils für das Verdichten und für das Entspannen von Druckluft ausgelegte Strömungsmaschinen aufgestellt werden. Hierdurch wird ein im Vergleich zum Stand der Technik wesentlich verbesserter und besonders hoher Wirkungsgrad der Energiespeicherung erzielt.

Die vorzugsweise als Turbomaschinen ausgeführten Strömungsmaschinen sind vorzugsweise mehrstufig aufgebaut, um bei den zu erzielenden Druckverhältnissen sowohl bei einem Verdichten von Umgebungsdruck auf Betriebsdruck des Druckluftspeichers, als auch beim Entspannen vom Betriebsdruck auf Umgebungsdruck zur Erzielung eines größtmöglichen Wirkungsgrads beispielsweise bezüglich ihrer Schaufelprofile, ihrer wirksamen Strömungsquerschnitte, ihrer Stufenzahl sowie des Druckverhältnisses ihrer einzelnen Stufen optimal angepasst zu sein.

Die mindestens eine zum Verdichten der Druckluft vorgesehene erste Strömungsmaschine kann dabei wenigstens eine Radialverdichterstufe aufweisen. Radialturbomaschinen weisen Vorteile in der besonders einfachen Konstruktion sowie beim Einsatz zur Verdichtung auf. Darüber hinaus kann wegen der Irrelevanz des Bauraums bei stationärer Anwendung für den Verdichter wenigstens eine Radialverdichterstufe vorgesehen sein. Diese arbeitet durch Nutzung der Massenträgheit der zu verdichtenden Luft besonders effektiv.

Die erste Strömungsmaschine kann alternativ oder zusätzlich mindestens eine Axialverdichterstufe aufweisen. Insbesondere Axialturbomaschinen sind zur Entspannung unter anderem wegen des von ihnen bewältigbaren hohen Massenstroms, ihrer hohen Leistungsdichte und ihrer Wartungsarmut besonders geeignet.

Die mindestens eine zum Entspannen der Druckluft vorgesehene zweite Strömungsmaschine kann wenigstens eine Axialturbinenstufe aufweisen.

Die einzelnen Axialstufen, unabhängig davon, ob es sich um eine Axialverdichter-oder um eine Axialturbinenstufe handelt, weisen vorzugsweise unterschiedliche Schaufelblattzahlen, besonders bevorzugt unterschiedliche Primzahlen auf. Hierdurch werden Resonanzen und hieraus resultierende Materialermüdungen vermieden.

Alternativ ist die Verwendung gleicher Schaufelblattzahlen in aufeinander folgenden Schaufelgittern gleichen Bezugssystems in den einzelnen Axialstufen denkbar, unabhängig davon, ob es sich um eine Axialverdichter- oder um eine Axialturbinenstufe handelt. Hierdurch lässt sich der Effekt des so genannten Clockings bei den insbesondere immer unter den selben Verhältnissen im Auslegungszustand betriebenen Strömungsmaschinen effektiv nutzen. Hierbei werden die Schaufelblätter aufeinander folgender Schaufelgitter gleichen Bezugssystems, beispielsweise in Strömungsrichtung aufeinander folgende Statorschaufelblätter oder Rotorschaufelblätter, derart gegeneinander verdreht angeordnet, dass die Schaufelblätter des stromab liegenden Schaufelgitters im Auslegungszustand genau im Nachlauf der Schaufelblätter des stromauf liegenden Schaufelgitters liegen. Hierdurch verschlechtert sich zwar die Dicke der Grenzschicht, durch die stärkere Durchmischung können jedoch größere Differenzen fallenden statischen Drucks in der Strömung überwunden werden. Hierdurch können höhere Druckverhältnisse in den einzelnen Stufen verwirklicht werden, wodurch wiederum weniger Stufen insgesamt verbaut werden müssen, so dass insgesamt Kosten für Herstellung und Wartung eingespart werden können.

Besonders bevorzugt können verschiedene Stufen wenigstens einer Strömungsmaschine auf getrennten Wellen angeordnet sein, welche beispielsweise über ein gemeinsames Getriebe oder über mehrere Getriebe mit einem oder mehreren Generatoren zur Elektrizitätserzeugung oder mit einem oder mehreren Elektromotoren zum elektrischen Antrieb der Stufen gekoppelt sein können. Hierdurch wird eine optimale Anpassung der Drehzahlen der einzelnen Stufen und damit der Auslegung der Schaufelprofile der jeweiligen Stufen an den über die Stufe hinweg herrschenden Totaldruck, die Strömungsgeschwindigkeit und das spezifische Volumen der Druckluft erfolgen.

Das Rohrleitungssystem kann mindestens eine zumindest zeitweilig mit dem mindestens einen Druckluftspeicher und bedarfsweise mit der ersten Rohrleitung oder mit der zweiten Rohrleitung verbundene zumindest zeitweilig druckführende dritte Rohrleitung aufweisen. Beispielsweise die mindestens eine dritte Rohrleitung des Rohrleitungssystems umfasst vorzugsweise Absperrmittel zur bedarfsweise Absperrung und Herstellung ihrer Verbindung mit der mindestens einen ersten Rohrleitung oder mit der mindestens einen zweiten Rohrleitung. Hierdurch kann die dritte Rohrleitung zeitversetzt mit der ersten und mit der zweiten Rohrleitung in Verbindung gebracht werden.

Ferner kann das Rohrleitungssystem Absperrmittel zur Absperrung und Herstellung der Verbindung der dritten Rohrleitung mit dem mindestens einen Druckluftspeicher aufweisen. Hierdurch kann der mit dem Druckluftspeicher kommunizierende und unter Druck stehende Teil des Rohrleitungssystems verkleinert werden, wodurch die Gefahr von Druckverlusten aus dem Druckluftspeicher durch Leckagen im Rohleitungssystem verringert wird.

Alternativ kann der Druckluftspeicher Absperrmittel zur Abtrennung und bedarfsweise Herstellung der Verbindung mit der oder den zum jeweiligen Bedarf vorgesehenen Strömungsmaschinen aufweisen. Hierdurch kann das gesamte Rohrleitungssystem vom Druckluftspeicher getrennt werden, wodurch die Gefahr von Druckverlusten aus dem Druckluftspeicher durch Leckagen im Rohleitungssystem ausgeschlossen wird.

Die mindestens eine dritte Rohrleitung kann mit dem mindestens einen Wärmetauscher primärseitig verbunden sein bzw. dessen Primärseite umfassen. Der wenigstens eine erste Wärmetauscher dient hierbei sowohl zum Auf-, als auch zum Entladen des Wärmespeichers. Hierdurch wird ein besonders einfacher Aufbau des Sekundärkreislaufs geschaffen.

Alternativ kann das adiabatische Druckluftspeicherkraftwerk zusätzlich zu dem bevorzugt mindestens einen ersten Wärmetauscher darstellenden bereits beschriebenen mindestens einen Wärmetauscher wenigstens einen zweiten Wärmetauscher umfassen. Der mindestens eine zweite Wärmetauscher ist primärseitig bevorzugt mit der mindestens einen zweiten Rohrleitung verbunden. Der mindestens eine zweite Wärmetauscher ist sekundärseitig mit dem Sekundärkreislauf verbunden, wobei der mindestens eine zweite Wärmetauscher ebenfalls nur während des primärseitigen Durchströmens der Druckluft sekundärseitig zeitweilig von dem Wärmeübertragungsfluid durchströmt ist. Der wenigstens eine zweite Wärmetauscher ist damit im Entnahmebetrieb des adiabatischen Druckluftspeicherkraftwerks und damit während des Entladens des Wärmespeichers primärseitig zeitweilig von der vom Druckluftspeicher zur mindestens einen zweiten Strömungsmaschine strömenden Druckluft durchströmt. Für den mindestens einen ersten Wärmetauscher verbleibt damit eine Anordnung entweder in der mindestens einen ersten Rohrleitung und/oder in einer gegebenenfalls vorgesehenen dritten Rohrleitung. In jedem Fall ist der mindestens eine erste Wärmetauscher hierbei zur Entnahme von Wärme aus der Druckluft während des Aufladebetriebs des adiabatischen Druckluftspeicherkraftwerks und zum Aufladen des Wärmespeichers durch Zufuhr der der Druckluft entnommenen Wärme zu den Wärmespeichermitteln vorgesehen. Der mindestens eine zweite Wärmetauscher ist demgegenüber zum Einbringen von Wärme von den Wärmespeichermitteln entnommener Wärme in die Druckluft während des Entladebetriebs des adiabatischen Druckluftspeicherkraftwerks und zum Entladen des Wärmespeichers vorgesehen. Dabei können die ersten und zweiten Rohrleitungen jeweils direkt mit dem Druckluftspeicher durch Absperrmittel bedarfsweise verbunden sein, oder vermittels mindestens einer dritten Rohrleitung indirekt mit dem Druckluftspeicher durch Absperrmittel bedarfsweise verbunden sein. Insbesondere bei direkt mit dem Druckluftspeicher verbundenen ersten und zweiten Rohrleitungen wird ein in Bezug auf die Strömungsführung der Druckluft besonders effektives Rohrleitungssystem geschaffen.

Das adiabatische Druckluftspeicherkraftwerk kann alternativ oder zusätzlich steuerbare Umwälzmittel zum zeitweiligen Durchströmen wenigstens eines Wärmetauschers von dem Wärmeübertragungsfluid wenigstens in einem Teil des Sekundärkreislaufs aufweisen. Durch Abstellen der Umwälzmittel kann hierbei schleichenden Wärmeverlusten über wenigstens einen in einem Teil des Sekundärkreislaufs angeordneten Wärmetauscher entgegengewirkt werden, wohingegen durch Einschalten der Umwälzmittel ein besonders effektiver Austausch von Wärme sowohl mit der Druckluft, als auch mit den Wärmespeichermitteln gewährleistet ist.

Die Umwälzmittel können variabel ansteuerbar sein, so dass die Umwälzgeschwindigkeit wenigstens in einem Teil des Sekundärkreislaufs abhängig von der der Druckluft zu entnehmenden und/oder zuzuführenden Wärme geregelt werden kann. Durch Regelung der Umwälzgeschwindigkeit des Wärmeübertragungsfluids wenigstens in einem Teil des Sekundärkreislaufs kann auf den Austausch der Wärme zwischen den Wärmespeichermitteln und der Druckluft Einfluss genommen werden und der Austausch an die momentan der Druckluft zuzuführende oder zu entnehmende Wärme und die momentane Temperatur der Wärmespeichermittel angepasst werden.

Der Wärmespeicher und damit vorzugsweise der gesamten Sekundärkreislauf kann gegenüber der Umgebung im wesentlichen drucklos bzw. im wesentlichen unter Gleichdruck mit der Umgebung ausgeführt sein. Hierdurch wird sowohl ein unkontrolliertes Entweichen von Wärmeübertragungsfluid aus dem Sekundärkreislauf in die Umgebung verhindert, wie es ansonsten bei einem dem Betriebsdruck des Druckluftspeichers entsprechenden hohem Überdruck gegenüber der Umgebung auftritt, als auch das unkontrollierte Eindringen von Umgebungsluft verhindert, wie es ansonsten bei einem unter Unterdruck gegenüber der Umgebung stehenden Sekundärkreislauf vorkommt. Damit einhergehend wird eine Erhöhung des Wirkungsgrads des adiabatischen Druckluftspeicherkraftwerks erzielt.

Alternativ kann das Wärmeübertragungsfluid im Sekundärkreislauf unter einem Druck größer gleich dem Umgebungsdruck und kleiner gleich 10 bar stehen. Hierbei handelt es sich um ein Druckniveau, welches im Vergleich zum Betriebsdruck des Druckluftspeichers einfach zu beherrschen ist, und darüber hinaus einen hohen Wärmetransport im Sekundärkreislauf ermöglicht. Hierdurch wird zwar nicht wie beim Stand der Technik bei der Verwendung von Gasen als Wärmeübertragungsfluid eine besonders große mittlere freie Wegstrecke der beteiligten Moleküle bzw. Atome erreicht, jedoch aufgrund der höheren Dichte und wahlweise unter Verwendung steuerbarer Umwälzmittel ein wesentlich größerer Wärmetransport erreicht.

Es ist ersichtlich, dass die Erfindung verwirklicht sein kann durch einen drucklosen Wärmespeicher, der nur bei Bedarf mit einem Wärmetauscher gekoppelt ist. Ebenso ersichtlich ist, dass die Erfindung alternativ oder zusätzlich durch unterschiedliche Strömungsmaschinen zum Verdichten und Entspannen sowie bevorzugt getrennte Strömungswege zwischen dem Druckluftspeicher und den Strömungsmaschinen verwirklicht sein kann, in welchen Strömungswegen bevorzugt getrennte und über das Wärmeübertragungsfluid im Sekundärkreislauf mit den Wärmespeichermitteln des Wärmespeichers gekoppelte Wärmetauscher für das Be- und Entladen des Wärmespeichers angeordnet sind, welche Wärmetauscher zeitversetzt vom selben Wärmeübertragungsfluid zeitweilig durchströmt werden. Hierdurch können die Wärmetauscher räumlich getrennt in verschiedenen zeitweilig Druck führenden Rohrleitungen vorgesehen sein, so dass ein optimaler Zulauf zur Turbine beim Entladen des Druckluftspeichers und ein möglichst verlustfreie Abfuhr vom Verdichter zum Druckluftspeicher beim Aufladen geschaffen wird.

Vorteile der Erfindung gegenüber dem Stand der Technik sind unter Anderem durch eine Verhinderung eines unkontrollierten, schleichenden Entweichens von Druckluft aus einem unter Druck stehenden und mit Druckluft beaufschlagten Wärmespeichers. Ein damit einhergehender Vorteil ist ein verringerter konstruktiver Aufwand für den Wärmespeicher, da dieser nach der Erfindung nicht mit Druckluft beaufschlagt und vorzugsweise unter Gleichdruck mit der Umgebung steht. Ein zusätzlicher Kostenvorteil ergibt sich aus dem Umstand, dass beim erfindungsgemäßen adiabatischen Druckluftspeicherkraftwerk im Vergleich zum Stand der Technik weite Teile des Rohrleitungssystems nicht mehr gegen Wärmeverluste isoliert werden müssen, da die Wärme bereits sehr früh weit vor dem Druckluftspeicher der Druckluft entnommen und bei Bedarf erst sehr spät lange hinter dem Druckluftspeicher der Druckluft wieder zugeführt werden kann. Hiermit lassen sich im Vergleich zur Isolation druckführender Rohrleitungen beim Stand der Technik wesentliche Kosteneinsparungen verwirklichen, da im Vergleich die Isolation des im Wesentlichen druckfreien Sekundärkreislaufs bei der Erfindung einfach und kostengünstig hergestellt werden kann.

Zusätzliche Vorteile der Erfindung liegen in einer Behebung von beim Stand der Technik auftretender schleichender Wärmeverluste aus dem Wärmespeicher über das Rohrleitungssystem, auch wenn dieses zeitweilig nicht von Druckluft durchströmt wird. Dies wird bei der Erfindung dadurch erreicht, indem zumindest Wärmetauscher umfassende Teile des Sekundärkreislaufs nur dann vom Wärmeübertragungsfluid durchströmt sind, wenn Druckluft durch das Rohrleitungssystem strömt. Ein weiterer hieraus resultierender Vorteil ist, dass hierdurch einer lokalen Überhitzung des Rohrleitungssystems durch einen schleichenden Wärmeeintrag vorgebeugt wird. Hierdurch wird ein Aufeinandertreffen kalter Druckluft aus dem Druckluftspeicher bei beginnendem Entladebetrieb auf eine lokale Überhitzung verhindert. Dadurch kommt es zu keinen derartig erheblichen Materialbeanspruchungen und -ermüdungen wie beim Stand der Technik, so dass hiermit ansonsten einhergehende Schäden im Rohrleitungssystem bis hin zum Totalausfall beim erfindungsgemäßen adiabatischen Druckluftspeicherkraftwerks wirkungsvoll verhindert werden. Somit ist hierdurch die Betriebssicherheit des erfindungsgemäßen adiabatischen Druckluftspeicherkraftwerks gegenüber dem Stand der Technik maßgeblich erhöht, da Materialermüdungen im Rohrleitungssystem durch unkontrollierte thermische Beanspruchungen durch die Erfindung vermieden werden.

Weitere Vorteile gegenüber dem Stand der Technik ergeben sich durch eine zusätzliche Möglichkeit regelungstechnisch Einfluss auf den Austausch der Wärme zwischen den Wärmespeichermitteln und der Druckluft zu nehmen, beispielsweise indem die Zirkulations- bzw. Umwälzgeschwindigkeit des Wärmeübertragungsfluids wenigstens in Teilen des Sekundärkreislaufs in Abhängigkeit des momentan benötigten Austauschs an Wärme zwischen den Wärmespeichermitteln und der Druckluft eingestellt werden kann.

Ein besonderer Vorteil der Erfindung liegt in der Möglichkeit der Verwendung unterschiedlicher, auf die jeweils einzige Aufgabe optimierter Strömungsmaschinen für das Verdichten sowie für das Entspannen der Druckluft in einem adiabatischen Druckluftspeicherkraftwerk. Beim Stand der Technik sind beim konventionellen Druckluftspeicherkraftwerk aus der Not heraus unterschiedliche Strömungsmaschinen vorgesehen, da bei diesem im Entladebetrieb notwendigerweise eine den Gesamtwirkungsgrad des konventionellen Druckluftspeicherkraftwerks deutlich herabsetzenden Gasturbine bestehend im Wesentlichen aus Verdichter, Brennkammer und Turbine benötigt wird, um die Druckluft überhaupt nutzen zu können, indem beispielsweise zum Schutz vor Vereisung die Druckluft vor der Entspannung zunächst durch Vorverdichtung, Brennstoffeinspritzung und Entzündung des Brennstoff-Druckluft-Gemischs erhitzt und erst im Anschluss daran entspannt wird. Die Vorverdichtung wird hierbei unter anderem benötigt, um die Druckluft auf eine Temperatur anzuheben, bei der eine durch Brennstoffeinspritzung und anschließende Entzündung stattfindende Verbrennung stabil aufrecht erhalten werden kann. Die Vorverdichtung findet hierbei im Verdichter der Gasturbine statt, welcher per se unter anderem wegen des kritischen Druckanstiegs einen schlechteren Wirkungsgrad aufweist, als eine Turbine, jedoch beim Stand der Technik gerade im Entladebetrieb des konventionellen Druckluftspeicherkraftwerks benötigt wird. Die Brennstoffeinspritzung und Entzündung des Brennstoff-Druckluft-Gemischs findet anschließend in der Brennkammer der Gasturbine statt, welcher aufgrund der zur an die Ausbreitungsgeschwindigkeit der Flammenfront notwendigen Herabsetzung der Strömungsgeschwindigkeit per se ebenfalls eine Herabsetzung des Wirkungsgrads nach sich zieht, jedoch beim Stand der Technik im Entladebetrieb des konventionellen Druckluftspeicherkraftwerks ebenfalls benötigt wird. Die Erfindung schafft demgegenüber die Möglichkeit, mindestens eine gesondert für das Verdichten der Druckluft vorgesehene Strömungsmaschine für den Aufladebetrieb sowie mindestens eine für das Entspannen der Druckluft vorgesehene Strömungsmaschine für den Entladebetrieb in einem adiabatischn Druckluftspeicherkraftwerk einsetzen zu können, wodurch eine im Vergleich zum Stand der Technik erhebliche Wirkungsgradsteigerung erzielt wird.

Ein zusätzlicher Vorteil der Erfindung gegenüber dem Stand der Technik ist darin zu sehen, dass der Sekundärkreislauf nicht mit Unterdruck beaufschlagt wird. Hierdurch können zum Einen erhebliche Kosten für eine zur Verwirklichung einer Unterdruckbeaufschlagung erforderliche gasdichte Abdichtung des Wärmespeichers sowie des gesamten Sekundärkreislaufs eingespart werden. Weitere Einsparungen ergeben sich durch den Verzicht auf das kostspielig und aufwändige Aufrechterhalten des Unterdrucks. Darüber hinaus wird die Betriebssicherheit des adiabatischen Druckluftspeicherkraftwerks hierdurch erhöht, da Leckagen nicht zum Eindringen unerwünschter Substanzen in den Sekundärkreislauf führen können.

### Kurzbeschreibung der Zeichnungen

Die Erfindung wird nachfolgend anhand in den Zeichnungen dargestellter Ausführungsbeispiele näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: eine Prinzipskizze eines ersten Ausführungsbeispiels eines Druckluftspeicherkraftwerks.
- Fig. 2: eine Prinzipskizze eines zweiten Ausführungsbeispiels eines Druckluftspeicherkraftwerks.
- Fig. 3: eine Prinzipskizze eines dritten Ausführungsbeispiels eines Druckluftspeicherkraftwerks.
- Fig.4: eine Prinzipskizze eines vierten Ausführungsbeispiels eines Druckluftspeicherkraftwerks.

### Ausführliche Beschreibung der bevorzugten Ausführungsbeispiele

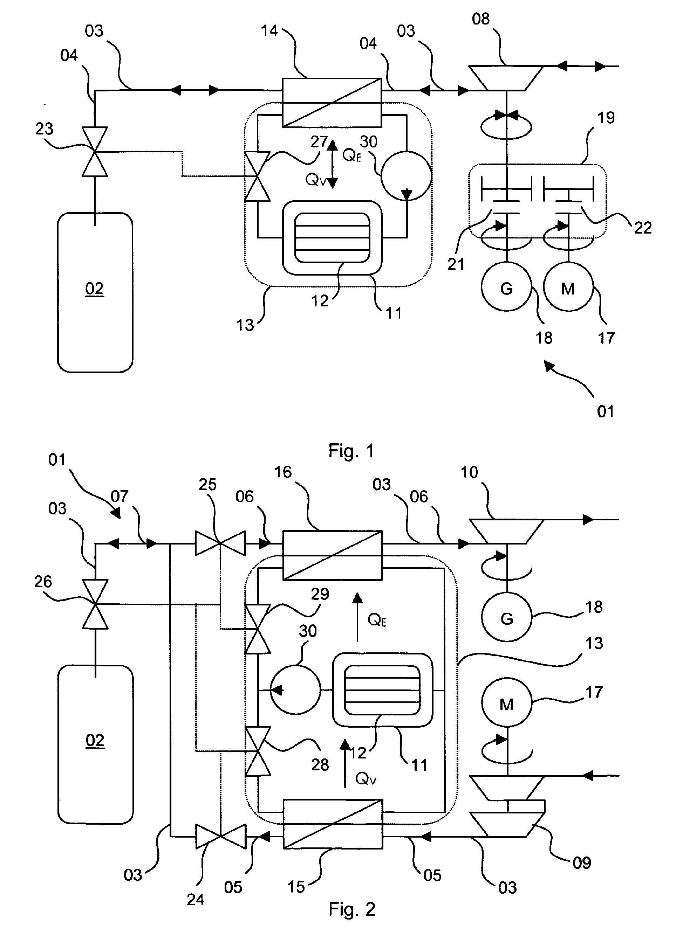

Ein in den Fig. 1 bis Fig. 4 in verschiedenen Ausführungen dargestelltes adiabatisches Druckluftspeicherkraftwerk 01 umfasst im Wesentlichen:
- mindestens einen Druckluftspeicher 02,
- wenigstens eine mit dem Druckluftspeicher 02 über ein Rohrleitungssystem 03 mit zumindest zeitweilig druckführenden Rohrleitungen 04, 05, 06, 07 zumindest bedarfsweise verbundene Strömungsmaschine 08, 09, 10 zum Verdichten und/oder Entspannen von im Druckluftspeicher 02 gespeicherter Druckluft, sowie
- mindestens einen Wärmespeicher 11 mit zur Durchleitung eines Wärmeübertragungsfluids geeigneten Wärmespeichermitteln 12 zur Zwischenspeicherung von beim Verdichten entstehender Wärme Qᵥ und beim Entspannen wieder benötigter Wärme Q_{E}.

Der Wärmespeicher 11 ist in einem Sekundärkreislauf 13 angeordnet, der von den zeitweilig druckführenden Rohrleitungen 04, 05, 06, 07 des Rohrleitungssystems 03 durch mindestens einen primärseitig zeitweilig von der Druckluft durchströmten und sekundärseitig nur während des primärseitigen Durchströmens mit Druckluft ebenfalls zeitweilig von dem Wärmeübertragungsfluid durchströmten Wärmetauscher 14, 15, 16 getrennt ist.

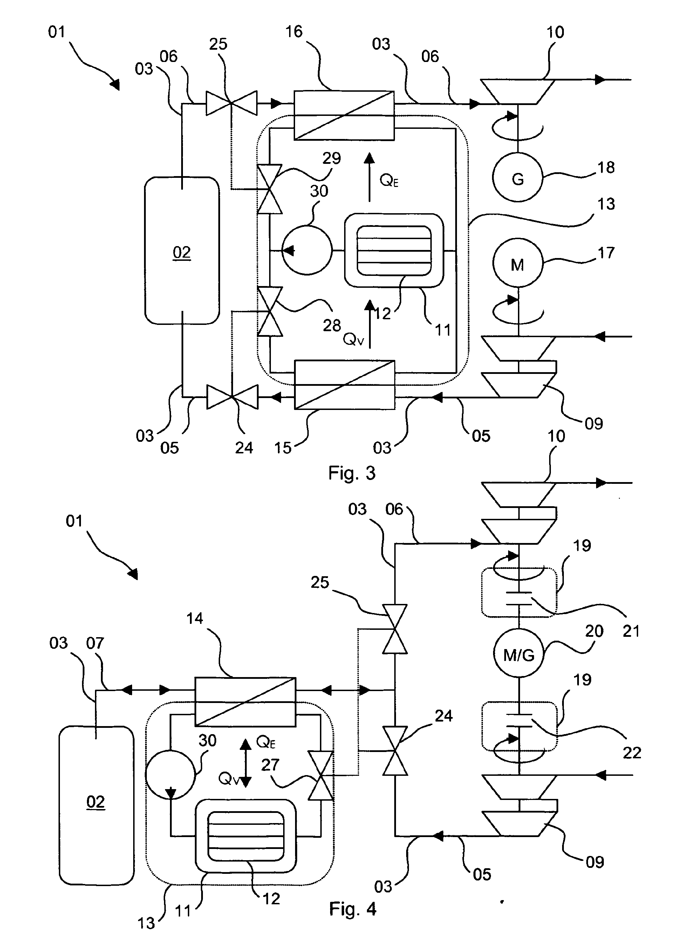

Bei einem in Fig. 1 dargestellten adiabatischen Druckluftspeicherkraftwerk 01 ist eine Strömungsmaschine 08 sowohl zum Verdichten, als auch zum Entspannen von im Druckluftspeicher 02 gespeicherter Druckluft vorgesehen. Das Rohrleitungssystem besteht aus einer zeitweilig druckführenden Rohrleitung 04, welche im Aufladebetrieb und im Entladebetrieb in entgegengesetzten Richtungen von der Druckluft durchströmt ist. In der Rohrleitung 04 ist ein Wärmetauscher 14 angeordnet, vermittels dem im Aufladebetrieb die beim Verdichten entstehende Wärme Qᵥ der Druckluft entnommen und dem Wärmespeicher 11 zugeführt wird, und vermittels dem im Entladebetrieb die zum Entspannen der Druckluft auf Umgebungstemperatur benötigte Wärme Q_{E} aus dem Wärmespeicher 11 wieder zugeführt wird. Zum Verdichten von im Druckluftspeicher 02 gespeicherter Druckluft wird diese der Umgebung entnommen und unter Verrichtung mechanischer Arbeit in der Strömungsmaschine 08 komprimiert. Die Strömungsmaschine 08 kann hierzu von einem vorzugsweise als Elektromotor ausgeführten Motor 17 angetrieben sein, welcher die hierfür benötigte Energie einem Stromnetz bei momentan zuviel in dem Stromnetz zur Verfügung stehender Elektrizität entnimmt. Zum Entspannen von im Druckluftspeicher 02 gespeicherter Druckluft wird diese über das Rohrleitungssystem 03 dem Druckluftspeicher 02 entnommen und in der Strömungsmaschine 08 vorzugsweise bis auf Umgebungsdruck unter Erzeugung mechanischer Arbeit entspannt. Um ein Entweichen der Druckluft aus dem Druckluftspeicher 02 zwischen dem Auf- und dem Entladebetrieb zu verhindern, sind Absperrmittel 23 in der Rohrleitung 04 vorgesehen. Die Strömungsmaschine 08 kann hierzu mit einem Generator 18 gekoppelt sein, welcher die hierbei erzeugte Energie einem Stromnetz bei momentan zuwenig in dem Stromnetz zur Verfügung stehender Elektrizität einspeist. Der Motor 17 und der Generator 18 können hierzu bedarfsweise vermittels eines Getriebes 19 mit der Strömungsmaschine gekoppelt werden. Alternativ ist denkbar, wie bei dem Ausführungsbeispiel in Fig. 4 auf andere Weise vorgesehen, einen kombinierten Elektromotor-Generator 20 vorzusehen, welcher ständig mit der Strömungsmaschine gekoppelt ist. Hierdurch können ansonsten im Getriebe 19 benötigten Kupplungen 21, 22 entfallen.

Bei den in den Fig. 2, Fig. 3 und Fig. 4 dargestellten adiabatischen Druckluftspeicherkraftwerken 01 sind getrennte Strömungsmaschinen 09, 10 zum Verdichten und zur Entspannung der Druckluft vorgesehen. Eine erste Strömungsmaschine 09 ist hierbei zum Verdichten der dann anschließend im Druckluftspeicher 02 gespeicherten Druckluft vorgesehen. Die erste Strömungsmaschine 09 kann dabei mehrstufig ausgebildet sein. In den Fig. 2, Fig. 3 und Fig. 4 ist die erste Strömungsmaschine 09 zur Verdeutlichung dieses Umstands zweistufig ausgeführt. Eine zweite Strömungsmaschine 10 ist zum Entspannen von dem Druckluftspeicher 02 entnommener Druckluft vorgesehen. Das Rohrleitungssystem 03 umfasst eine erste Rohrleitung 05, welche die erste Strömungsmaschine 09 zum Verdichten der Druckluft zeitweilig mit dem Druckluftspeicher 02 verbindet. Um das zeitweilige Verbinden zu verwirklichen, sind Absperrmittel 24 in der ersten Rohrleitung 05 vorgesehen. Das Rohrleitungssystem 03 umfasst außerdem eine zweite Rohrleitung 06, welche die zweite Strömungsmaschine 10 zum Entspannen der Druckluft zeitweilig mit dem Druckluftspeicher 02 verbindet. Um das zeitweilige Verbinden zu verwirklichen, sind Absperrmittel 25 in der zweiten Rohrleitung 06 vorgesehen.

Das Rohrleitungssystem 03 kann dabei wie in den Fig. 2 und Fig. 4 dargestellt eine beispielsweise zeitweilig mit dem Druckluftspeicher 02 und bedarfsweise mit der ersten Rohrleitung 05, sowie bedarfsweise mit der zweiten Rohrleitung 06 verbundene dritte Rohrleitung 07 umfassen. Zur bedarfsweise Absperrung und Herstellung der Verbindung der dritten Rohrleitung 07 mit der ersten Rohrleitung 05 oder mit der zweiten Rohrleitung 06 können die bereits erwähnten Absperrmittel 24, 25 dienen. Die dritte Rohrleitung 07 ist dabei im Auf- und Entladebetrieb des adiabatischen Druckluftspeicherkraftwerks 01 in entgegengesetzten Richtungen von der Druckluft durchströmt. Das Rohrleitungssystem 03 kann außerdem Absperrmittel 26 zur Absperrung und Herstellung der Verbindung der dritten Rohrleitung 07 mit dem Druckluftspeicher 02 aufweisen.

In der dritten Rohrleitung 07 kann wie in Fig. 4 dargestellt ein Wärmetauscher 14 angeordnet sein, vermittels dem im Aufladebetrieb des adiabatischen Druckluftspeicherkraftwerks 01 die beim Verdichten entstehende Wärme Qᵥ der Druckluft entnommen und dem Wärmespeicher 11 zugeführt wird, und vermittels dem im Entladebetrieb des adiabatischen Druckluftspeicherkraftwerks 01 die zum Entspannen der Druckluft auf Umgebungstemperatur benötigte Wärme Q_{E} aus dem Wärmespeicher 11 wieder zugeführt wird.

Das adiabatische Druckluftspeicherkraftwerk 01 kann wie in Fig. 2 und Fig. 3 dargestellt anstelle eines einzigen Wärmetauschers 14 einen ersten Wärmetauscher 15 und einen zweiten Wärmetauscher 16 aufweisen. Der erste Wärmetauscher 15 ist dabei in der ersten Rohrleitung 05 des Rohrleitungssystems 03 angeordnet. Der erste Wärmetauscher 15 ist primärseitig während des Aufladebetriebs von der von der zum Verdichten der Druckluft vorgesehenen ersten Strömungsmaschine 09 zum Druckluftspeicher 02 geförderten Druckluft durchströmt. Sekundärseitig ist der erste Wärmetauscher 15 ebenfalls nur während des während des Aufladebetriebs des adiabatischen Druckluftspeicherkraftwerks 01 anhaltenden primärseitigen Durchströmens mit Druckluft von dem Wärmeübertragungsfluid durchströmt. Vermittels des ersten Wärmetauschers 15 wird im Aufladebetrieb die beim Verdichten entstehende Wärme Q_{V} mittels des im Sekundärkreislauf 13 enthaltenen Wärmeübertragungsfluids der Druckluft entnommen und den Wärmespeichermitteln 12 des Wärmespeichers 11 zugeführt. Der zweite Wärmetauscher 16 ist primärseitig mit der zweiten Rohrleitung 06 verbunden. Der zweite Wärmetauscher 16 ist während des Entladebetriebs des adiabatischen Druckluftspeicherkraftwerks 01 von der vom Druckluftspeicher 02 zur zum Entspannen der Druckluft vorgesehenen zweiten Strömungsmaschine 10 strömenden Druckluft durchströmt. Der zweite Wärmetauscher 16 ist sekundärseitig mit dem Sekundärkreislauf 13 verbunden. Der zweite Wärmetauscher 16 ist nur während dem während des Entladebetriebs des adiabatischen Druckluftspeicherkraftwerks 01 anhaltenden primärseitigen Durchströmen der Druckluft sekundärseitig von dem im Sekundärkreislauf 13 enthaltenen Wärmeübertragungsfluid durchströmt.

Um das zeitweilige Durchströmen der Wärmetauscher 14, 15, 16 mit dem Wärmeübertragungsfluid im Sekundärkreislauf 13 sicherzustellen, sind im Sekundärkreislauf 13 Absperrmittel 27, 28, 29 zum zeitweiligen Absperren des Sekundärkreislaufs 13 zwischen den Wärmespeichermitteln 12 und den jeweiligen Wärmetauschern 14, 15, 16 vorgesehen.

Um das zeitweilige Durchströmen der Wärmetauscher 14, 15, 16 mit dem Wärmeübertragungsfluid im Sekundärkreislauf 13 sicherzustellen, können alternativ oder zusätzlich zu den Absperrmitteln 27, 28, 29 steuerbare Umwälzmittel 30 zum zeitweiligen Durchströmen wenigstens eines Wärmetauschers 14, 15, 16 von dem Wärmeübertragungsfluid in einem Teil des Sekundärkreislaufs 13 untergebracht sein.

Die Umwälzmittel 30 können variabel ansteuerbar sein, so dass die Umwälzgeschwindigkeit im momentan benötigten Teil des Sekundärkreislaufs 13 abhängig von der der Druckluft zu entnehmenden und/oder zuzuführenden Wärme Q_{V} bzw. Q_{E} geregelt werden kann.

Um das zeitgleich mit dem Durchströmen mit Druckluft stattfindende Durchströmen der Wärmetauscher 14, 15, 16 mit dem Wärmeübertragungsfluid sicherzustellen, können die im Rohrleitungssystem 03 und im Sekundärkreislauf 13 vorgesehenen Absperrmittel 23, 24, 25, 26, 27, 28, 29 wie durch die gestrichelten Linien angedeutet entsprechend gekoppelt geöffnet bzw. geschlossen werden.

Wichtig ist hervorzuheben, dass alle oder nur ein Teil der in den Fig. 1, Fig. 2, Fig. 3 und Fig. 4 dargestellten und zuvor beschriebenen Strömungsmaschinen 08, 09, 10 zwei oder mehrstufig ausgeführt sein können.

Ebenso wichtig ist hervorzuheben, dass generell ein oder mehrere mit oder ohne Kupplungen 21, 22 ausgeführte Getriebe 19 zwischen den jeweiligen Strömungsmaschinen 08, 09, 10 und den Motoren 17 und/oder Generatoren 18 und/oder Elektromotor-Generatoren 20 zur Anpassung der Drehzahlen vorgesehen sein können.

Die Erfindung ist insbesondere im Bereich der Herstellung und des Betriebs adiabatischer Druckluftspeicherkraftwerke gewerblich anwendbar.

### Bezugszeichenliste

- 01: adiabatisches Druckluftspeicherkraftwerk
- 02: Druckluftspeicher
- 03: Rohrleitungssystem
- 04: Rohrleitung
- 05: Rohrleitung
- 06: Rohrleitung
- 07: Rohrleitung
- 08: Strömungsmaschine
- 09: Strömungsmaschine
- 10: Strömungsmaschine
- 11: Wärmespeicher
- 12: Wärmespeichermittel
- 13: Sekundärkreislauf
- 14: Wärmetauscher
- 15: Wärmetauscher
- 16: Wärmetauscher
- 17: Motor
- 18: Generator
- 19: Getriebe
- 20: Elektromotor-Generator
- 21: Kupplung
- 22: Kupplung
- 23: Absperrmittel
- 24: Absperrmittel
- 25: Absperrmittel
- 26: Absperrmittel
- 27: Absperrmittel
- 28: Absperrmittel
- 29: Absperrmittel
- 30: Umwälzmittel
- Q_{V}: der Druckluft entnommene Wärme
- Q_{E}: der Druckluft zugeführte Wärme

## Patentansprüche

1. Adiabatisches Druckluftspeicherkraftwerk (01) mit:
- mindestens einem Druckluftspeicher (02),
- wenigstens einer mit dem Druckluftspeicher (02) über ein Rohrleitungssystem (03) mit zumindest zeitweilig druckführenden Rohrleitungen (04, 05, 06, 07) zumindest bedarfsweise verbundenen Strömungsmaschine (08, 09, 10) zum Verdichten und/oder Entspannen von im Druckluftspeicher (02) gespeicherter Druckluft, sowie
- mindestens einem Wärmespeicher (11) mit zur Durchleitung eines Wärmeübertragungsfluids geeigneten Wärmespeichermitteln (12) zur Zwischenspeicherung von beim Verdichten entstehender und beim Entspannen wieder benötigter Wärme (Q_{V}, Q_{E}), wobei
- der Wärmespeicher (11) in einem Sekundärkreislauf (13) angeordnet ist, der von den zeitweilig druckführenden Rohrleitungen (04, 05, 06, 07) des Rohrleitungssystems (03) durch mindestens einen primärseitig zeitweilig von der Druckluft durchströmten und sekundärseitig von dem Wärmeübertragungsfluid durchströmten Wärmetauscher (14, 15, 16) getrennt ist,
**gekennzeichnet durch**
Absperrmittel (27, 28, 29) zum zeitweiligen Absperren wenigstens eines Teils des Sekundärkreislaufs (13) zwischen den Wärmespeichermitteln und wenigstens einem Wärmetauscher (14, 15, 16), wobei der Wärmetauscher (14, 15, 16) nur während des primärseitigen Durchströmens mit Druckluft ebenfalls zeitweilig von dem Wärmeübertragungsfluid durchströmt ist.

2. Adiabatisches Druckluftspeicherkraftwerk nach Anspruch 1,
**gekennzeichnet durch**
getrennte Strömungsmaschinen zum Verdichten und zur Entspannung der Druckluft, wobei das Rohrleitungssystem (03) wenigstens eine mindestens eine erste Strömungsmaschine (09) zum Verdichten der Druckluft mit dem mindestens einen Druckluftspeicher (02) zumindest zeitweilig verbindende und zumindest zeitweilig druckführende erste Rohrleitung (05) sowie wenigstens eine den mindestens einen Druckluftspeicher (02) mit mindestens einer zweiten Strömungsmaschine (10) zum Entspannen der Druckluft zumindest zeitweilig verbindende und zumindest zeitweilig druckführende zweite Rohrleitung (06) umfasst.

3. Adiabatisches Druckluftspeicherkraftwerk nach Anspruch 2,
**dadurch gekennzeichnet,**
**dass** das Rohrleitungssystem (03) Absperrmittel (24, 25) zur bedarfsweise Absperrung und Herstellung der zeitweiligen Verbindung wahlweise der ersten Rohrleitung (05) oder der zweiten Rohrleitung (06) mit dem mindestens einen Druckluftspeicher (02) aufweist.

4. Adiabatisches Druckluftspeicherkraftwerk nach Anspruch 2 oder 3,
**dadurch gekennzeichnet,**
**dass** das Rohrleitungssystem (03) mindestens eine zumindest zeitweilig mit dem mindestens einen Druckluftspeicher (02) und bedarfsweise wahlweise mit der ersten Rohrleitung (05) oder mit der zweiten Rohrleitung (06) verbundene dritte Rohrleitung (07) sowie Absperrmittel (24, 25) zur bedarfsweise Absperrung und Herstellung der Verbindung der mindestens einen dritten Rohrleitung (07) mit der mindestens einen ersten Rohrleitung (05) oder mit der mindestens einen zweiten Rohrleitung (06) und/oder Absperrmittel (26) zur bedarfsweise Absperrung und Herstellung der Verbindung der mindestens einen dritten Rohrleitung (07) mit dem Druckluftspeicher (02) aufweist.

5. Adiabatisches Druckluftspeicherkraftwerk nach Anspruch 3 oder 4,
**dadurch gekennzeichnet,**
**dass** die mindestens eine dritte Rohrleitung mindestens einen Wärmetauscher (14, 15, 16) primärseitig umfasst.

6. Adiabatisches Druckluftspeicherkraftwerk nach einem der Ansprüche 2 bis 5,
**gekennzeichnet durch**
wenigstens einen ersten Wärmetauscher (15), welcher primärseitig mit der mindestens einen ersten Rohrleitung (05) verbunden und zeitweilig von der von der mindestens einen ersten Strömungsmaschine (09) zum Druckluftspeicher (02) strömenden Druckluft durchströmt ist, und welcher sekundärseitig mit dem Sekundärkreislauf (13) verbunden ist, wobei der mindestens eine erste Wärmetauscher (15) im Wesentlichen nur während des primärseitigen Durchströmens der Druckluft sekundärseitig von dem Wärmeübertragungsfluid durchströmt ist.

7. Adiabatisches Druckluftspeicherkraftwerk nach einem der Ansprüche 2 bis 6,
**dadurch gekennzeichnet,**
**dass** das adiabatische Druckluftspeicherkraftwerk (01) wenigstens einen zweiten Wärmetauscher (16) umfasst, welcher primärseitig mit der mindestens einen zweiten Rohrleitung (06) verbunden und zeitweilig von der vom Druckluftspeicher (02) zur mindestens einen zweiten Strömungsmaschine (10) strömenden Druckluft durchströmt ist, und welcher sekundärseitig mit dem Sekundärkreislauf (13) verbunden ist, wobei der mindestens eine zweite Wärmetauscher (16) im Wesentlichen nur während des primärseitigen Durchströmens der Druckluft sekundärseitig von dem Wärmeübertragungsfluid durchströmt ist.

8. Adiabatisches Druckluftspeicherkraftwerk nach einem der vorhergehenden Ansprüche,
**gekennzeichnet durch**
steuerbare Umwälzmittel (30) zum zeitweiligen Durchströmen wenigstens eines Wärmetauschers (14, 15, 16) von dem Wärmeübertragungsfluid in einem Teil des Sekundärkreislaufs (13).

9. Adiabatisches Druckluftspeicherkraftwerk nach Anspruch 8,
**dadurch gekennzeichnet,**
**dass** die Umwälzmittel (30) variabel ansteuerbar sind, so dass die Umwälzgeschwindigkeit wenigstens in einem Teil des Sekundärkreislaufs (13) abhängig von der der Druckluft zu entnehmenden und/oder zuzuführenden Wärme (Q_{V}, Q_{E}) geregelt werden kann.

10. Adiabatisches Druckluftspeicherkraftwerk nach einem der vorhergehenden Ansprüche,
**dadurch gekennzeichnet,**
**dass** im mindestens einen Wärmespeicher (11) ein im Wesentlichen dem Umgebungsdruck entsprechender Druck herrscht.

11. Adiabatisches Druckluftspeicherkraftwerk nach einem der vorhergehenden Ansprüche,
**dadurch gekennzeichnet,**
**dass** die mindestens eine Strömungsmaschine (08, 09, 10) als mehrstufig aufgebaute Turbomaschine ausgeführt ist.

12. Adiabatisches Druckluftspeicherkraftwerk nach Anspruch 11,
**dadurch gekennzeichnet,**
**dass** mindestens eine zum Verdichten und/oder Entspannen der Druckluft vorgesehene Strömungsmaschine (08, 09, 10) wenigstens eine Axialstufe aufweist.

13. Adiabatisches Druckluftspeicherkraftwerk nach Anspruch 11 oder 12,
**dadurch gekennzeichnet,**
**dass** mindestens eine zum Verdichten der Druckluft vorgesehene Strömungsmaschine (09) wenigstens eine Radialverdichterstufe aufweist.

14. Adiabatisches Druckluftspeicherkraftwerk nach Anspruch 11, 12 oder 13, **dadurch gekennzeichnet,**
**dass** verschiedene Stufen wenigstens einer Strömungsmaschine (08, 09, 10) auf getrennten Wellen angeordnet sind.

## Claims

1. Adiabatic pressurized air storage power plant (01) having:
- at least one pressurized air store (02),
- at least one turbomachine (08, 09, 10), which is connected at least as required to the pressurized air store (02) via a pipeline system (03) with at least intermittently pressure-conducting pipelines (04, 05, 06, 07), for the compression and/or expansion of pressurized air stored in the pressurized air store (02), and
- at least one heat accumulator (11) with heat store means (12), which are suitable for conducting a heat transfer fluid, for the temporary storage of heat (Q_{V}, Q_{E}) generated during the compression and required again during the expansion, wherein
- the heat accumulator (11) is arranged in a secondary circuit (13) which is separated from the intermittently pressure-conducting pipelines (04, 05, 06, 07) of the pipeline system (03) by at least one heat exchanger (14, 15, 16) which is intermittently traversed at the primary side by the pressurized air and is traversed at the secondary side by the heat transfer fluid,
**characterized by** shut-off means (27, 28, 29) for intermittently shutting off at least one part of the secondary circuit (13) between the heat store means and at least one heat exchanger (14, 15, 16), wherein the heat exchanger (14, 15, 16) is traversed likewise intermittently by the heat transfer fluid only while the primary side is being traversed by pressurized air.

2. Adiabatic pressurized air storage power plant according to claim 1,
**characterized by**
separate turbomachines for the compression and for the expansion of the pressurized air, wherein the pipeline system (03) comprises at least one first at least intermittently pressure-conducting pipeline (05) which at least intermittently connects at least one first turbomachine (09) for the compression of the pressurized air to the at least one pressurized air store (02), and at least one second at least intermittently pressure-conducting pipeline (06) which at least intermittently connects the at least one pressurized air store (02) to at least one second turbomachine (10) for the expansion of the pressurized air.

3. Adiabatic pressurized air storage power plant according to claim 2,
**characterized**
**in that** the pipeline system (03) has shut-off means (24, 25) for shutting off and producing the intermittent connection selectively of the first pipeline (05) or of the second pipeline (06) to the at least one pressurized air store (02) as required.

4. Adiabatic pressurized air storage power plant according to claim 2 or 3,
**characterized**
**in that** the pipeline system (03) has at least one third pipeline (07) which is at least intermittently connected to the at least one pressurized air store (02) and, as required, selectively to the first pipeline (05) or to the second pipeline (06), and shut-off means (24, 25) for shutting off and producing the connection of the at least one third pipeline (07) to the at least one first pipeline (05) or to the at least one second pipeline (06) as required, and/or shut-off means (26) for shutting off and producing the connection of the at least one third pipeline (07) to the pressurized air store (02) as required.

5. Adiabatic pressurized air storage power plant according to claim 3 or 4,
**characterized**
**in that** the at least one third pipeline comprises at least one heat exchanger (14, 15, 16) on the primary side.

6. Adiabatic pressurized air storage power plant according to one of claims 2 to 5,
**characterized by**
at least one first heat exchanger (15), which is connected at the primary side to the at least one first pipeline (05) and is intermittently traversed by the pressurized air flowing from the at least one first turbomachine (09) to the pressurized air store (02), and which is connected at the secondary side to the secondary circuit (13), wherein the at least one first heat exchanger (15) is traversed at the secondary side by the heat transfer fluid substantially only while the primary side is being traversed by the pressurized air.

7. Adiabatic pressurized air storage power plant according to one of claims 2 to 6,
**characterized**
**in that** the adiabatic pressurized air storage power plant (01) comprises at least one second heat exchanger (16) which is connected at the primary side to the at least one second pipeline (06) and which is intermittently traversed by the pressurized air flowing from the pressurized air store (02) to the at least one second turbomachine (10), and which is connected at the secondary side to the secondary circuit (13), wherein the at least one second heat exchanger (16) is traversed at the secondary side by the heat transfer fluid substantially only while the primary side is being traversed by the pressurized air.

8. Adiabatic pressurized air storage power plant according to one of the preceding claims,
**characterized by**
controllable circulation means (30) for the intermittent traversing of at least one heat exchanger (14, 15, 16) by the heat transfer fluid in a part of the secondary circuit (13).

9. Adiabatic pressurized air storage power plant according to claim 8,
**characterized**
**in that** the circulation means (30) are variably actuable such that the circulation speed at least in one part of the secondary circuit (13) can be regulated as a function of the heat (Q_{V}, Q_{E}) to be extracted from and/or supplied to the pressurized air.

10. Adiabatic pressurized air storage power plant according to one of the preceding claims,
**characterized**
**in that** a pressure substantially corresponding to ambient pressure prevails in the at least one heat accumulator (11).

11. Adiabatic pressurized air storage power plant according to one of the preceding claims,
**characterized**
**in that** the at least one turbomachine (08, 09, 10) is constructed as a multi-stage turbomachine.

12. Adiabatic pressurized air storage power plant according to claim 11,
**characterized**
**in that** at least one turbomachine (08, 09, 10) provided for the compression and/or expansion of the pressurized air has at least one axial stage.

13. Adiabatic pressurized air storage power plant according to claim 11 or 12,
**characterized**
**in that** at least one turbomachine (09) provided for the compression of the pressurized air has at least one radial compressor stage.

14. Adiabatic pressurized air storage power plant according to claim 11, 12 or 13,
**characterized**
**in that** different stages of at least one turbomachine (08, 09, 10) are arranged on separate shafts.

## Revendications

1. Centrale d'accumulation d'air comprimé adiabatique (01) avec :
- au moins un accumulateur d'air comprimé (02),
- au moins une turbomachine (08, 09, 10) reliée au moins en fonction des besoins avec un accumulateur de pression (02) via un système de tuyaux (03) avec au moins des tuyaux transmettant au moins temporairement de la pression (04, 05, 06, 07) pour comprimer et/ou détendre l'air comprimé accumulé dans l'accumulateur d'air comprimé (02), ainsi
- au moins un accumulateur de chaleur (11) avec des moyens appropriés d'accumulation de chaleur (12) pour transférer un fluide caloporteur dans le but d'accumuler de manière intermédiaire la chaleur (Q_{V}, Q_{E}), qui se dégage lors de la compression et de nouveau nécessaire lors de la détente, tout en notant que
- l'accumulateur de chaleur (11) est disposé dans un circuit secondaire (13), qui est séparé des tuyaux transmettant au moins temporairement de la pression (04, 05, 06, 07) du système de tuyaux (03) par au moins un échangeur de chaleur traversé côté primaire temporairement par de l'air comprimé et côté secondaire par le fluide caloporteur (14, 15, 16),
**caractérisé en ce que**
des moyens de coupure (27, 28, 29) pour couper temporairement au moins une partie du circuit secondaire (13) entre les moyens d'accumulation de chaleur et au moins un échangeur de chaleur (14, 15, 16), tout en notant que l'échangeur de chaleur (14, 15, 16) est traversé aussi temporairement par le fluide caloporteur pendant le passage de l'air comprimé côté primaire.

2. Centrale d'accumulation d'air comprimé adiabatique selon la revendication 1,
**caractérisée par** des turbomachines distinctes pour comprimer et détendre l'air comprimé, tout en notant que le système de tuyauteries (03) comporte au moins une première turbomachine (09) pour compresser l'air comprimé avec au moins un des accumulateurs d'air comprimé (02) reliant au moins temporairement et transmettant au moins temporairement de la pression au premier tuyau (05) ainsi qu'avec au moins une deuxième turbomachine (10) reliant au moins un accumulateur de pression (02) pour détendre l'air comprimé comporte un deuxième tuyau (06) reliant au moins temporairement et transmettant au moins temporairement de la pression.

3. Centrale d'accumulation d'air comprimé adiabatique selon la revendication 2,
**caractérisée en ce que**,
le système de tuyaux (03), les robinets de coupure (24, 25) pour couper en fonction des besoins et pour établir la liaison temporaire, présente au choix le premier tuyau (05) ou le deuxième tuyau (06) avec au moins un accumulateur de pression (02).

4. Centrale d'accumulation d'air comprimé adiabatique selon la revendication 2 ou 3
**caractérisée en ce que**, le système de tuyauterie (03) présente au moins un troisième tuyau (07) relié au moins temporairement à un accumulateur de pression (02) et en fonction des besoins au choix avec le premier tuyau (05) ou bien avec le deuxième tuyau (06) ainsi que des robinets de coupure (24, 25) pour couper en fonction des besoins et établir une liaison avec au moins un troisième tuyau (07) avec au moins le premier tuyau (05) ou bien avec au moins le deuxième tuyau (06) et/ou robinet de coupure (26) pour couper en fonction des besoins et établir la liaison avec au moins un troisième tuyau (07) et l'accumulateur de pression (02).

5. Centrale d'accumulation d'air comprimé adiabatique selon la revendication 3 ou 4
**caractérisée en ce qu'**au moins le troisième tuyau comporte côté primaire un échangeur de chaleur (14, 15, 16).

6. Centrale d'accumulation d'air comprimé adiabatique selon les revendications 2 à 5
**caractérisée en ce qu'**au moins le premier échangeur de chaleur (15), qui est relié côté primaire avec au moins le premier tuyau (05) et traversé temporairement au moins de la première turbomachine (09) vers l'accumulateur de pression (02) par un flux d'air comprimé, et relié côté secondaire avec le circuit secondaire (13), tout en notant qu'au moins le premier échangeur de chaleur (15) est traversé pour l'essentiel uniquement pendant le passage coté primaire de l'air comprimé côté par le fluide caloporteur.

7. Centrale d'accumulation d'air comprimé adiabatique selon les revendications 2 à 6
**caractérisée en ce que**
la centrale d'accumulation d'air comprimé adiabatique (01) comporte au moins un deuxième échangeur de chaleur (16), qui côté primaire est relié à au moins un deuxième tuyau (06) et temporairement traversé de l'accumulateur de pression (02) vers au moins une deuxième turbomachine (10) par un flux d'air comprimé, et qui côté secondaire est reliée avec le circuit secondaire (13), tout en notant qu'au moins un deuxième échangeur de chaleur (16) est traversé pour l'essentiel uniquement pendant le passage du flux d'air comprimé côté primaire par le fluide caloporteur côté secondaire.

8. Centrale d'accumulation d'air comprimé adiabatique selon l'une des revendications précédentes,
**caractérisée en ce que** des moyens de recirculation pilotables (30) pour faire traverser temporairement au moins un échangeur de chaleur (14, 15, 16) par du fluide caloporteur dans une partie du circuit secondaire (13).

9. Centrale d'accumulation d'air comprimé adiabatique selon la revendication 8
**caractérisée en ce que**,
les moyens de recirculation (30) sont pilotables de façon variable, si bien que la vitesse de recirculation puisse être régulée au moins dans une partie du circuit secondaire (13) en fonction de la chaleur à extraire et/ou à apporter à l'air comprimé (Q_{V}, Q_{E}).

10. Centrale d'accumulation d'air comprimé adiabatique selon l'une des revendications précédentes,
**caractérisée en ce que** dans au moins un accumulateur de pression (11) il règne pour l'essentiel une pression correspondant à la pression environnante.

11. Centrale d'accumulation d'air comprimé adiabatique selon l'une des revendications précédentes,
**caractérisée en ce qu'**au moins une turbomachine (08, 09, 10) soit conçue comme une turbomachine à plusieurs étages.

12. Centrale d'accumulation d'air comprimé adiabatique selon la revendication 11,
**caractérisée en ce qu'**au moins une turbomachine prévue pour comprimer et/ou détendre l'air comprimé (08, 09, 10) présente au moins un étage axial.

13. Centrale d'accumulation d'air comprimé adiabatique selon la revendication 11 ou 12,
**caractérisée en ce qu'**au moins une turbomachine prévue pour compresser l'air comprimé (09) présente au moins un étage de compression radiale.

14. Centrale d'accumulation d'air comprimé adiabatique selon la revendication 11, 12 ou 13,
**caractérisée en ce que** différents étages d'au moins une turbomachine (08, 09, 10) soient disposés sur des arbres distincts.
